# EUROPEAN PATENT SPECIFICATION

(11) **EP 4 124 265 B1**
(45) Date of publication and mention of the grant of the patent: **23.10.2024**
(21) Application number: 22187974.5
(22) Date of filing: 29.07.2022
(51) Int. Cl.: A47F 3/00, A47J 36/24

(54) **CABINET FOR DISPLAYING AND STORING COOKED FOOD PRODUCTS**
SCHAUKASTEN FÜR DIE AUSSTELLUNG UND LAGERUNG VON GEKOCHTEN LEBENSMITTELN
CABINET POUR LA PRÉSENTATION ET LE STOCKAGE DE PRODUITS ALIMENTAIRES CUITS

(30) Priority: 30.07.2021 IT 202100020666
(43) Date of publication of application: 01.02.2023
(73) Proprietor: Arneg S.p.A., 35010 Campo San Martino (PD) (IT)
(72) Inventor: Corbino, Carlo, 30035 Mirano (VE) (IT); Azzalin, Roberto, 35012 Campo San Piero (PD) (IT)
(74) Representative: Pelanda, Paolo

(56) References cited:
- EP-A1- 1 444 933
- GB-A- 2 349 454
- JP-A- H0 614 827
- US-A1- 2009 181 146

## Description

### Field of application of the invention

The present invention concerns the technical field of food counters and food display counters, and the subject of the same is a cabinet for displaying and storing cooked food products intended for sale.

### State of the art

The use of display cabinets suited to promote the cooking, heating and preservation of food products intended for consumption by a user has long been known in the catering, large-scale distribution and retail sectors.

These cabinets, often referred to also as "hot food counters", comprise a substantially closed compartment inside which there is a supporting plane intended to support the food products on display.

The cabinet is also provided with heating means suited to transfer a predetermined amount of heat to the supporting plane, so that, through convection, it will be possible to cook and/or heat the food products placed on said surface.

In general, the heating means used in display cabinets can comprise heat sources of various types.

For example, said heating sources can be electrical, meaning that the heating of the supporting plane can be obtained by means of heat dissipation through the Joule effect following the passage of an electric current through a resistor.

Alternatively, heated food display cabinets can comprise electromagnetic induction heating means, which are designed to promote the generation of heat directly on the supporting plane following the application of an electromagnetic field generated by one or more plates (located below the surface itself).

However, the heating means are very frequently made in such a way that one or more infrared lamps is/are integrated therein.

These lamps are typically installed above the supporting plane to promote the heating of the latter through radiation of an infrared beam.

Infrared lamps are provided with a shaped reflector, placed above them and suited to reflect downwards (that is, towards the supporting plane) the portion of infrared radiation that, in the absence of said reflector, would interact with the upper side or the lateral sides of the cabinet.

The components positioned in proximity to the lamps (for example, the ceiling light) must be kept at room temperature (or at slightly higher temperatures) so as to prevent the user from being scalded or burnt during interaction with said sides when picking heated food products.

However, the main drawback of infrared heat sources lies in that the radiation they emit is not uniformly distributed inside the compartment and this causes the supporting plane to heat up unevenly.

The heating of said surface, in fact, is obtained through the synergic effect produced by two components emitted by the same radiant source: i) the direct radiation coming from the lamp, ii) the reflected radiation coming from the screen placed above the lamp (or from any side delimiting the compartment).

The composition of these two distinct types of radiation causes the supporting plane to heat up unevenly.

In fact, it has been possible to measure experimentally that the temperature gradient varies considerably as one moves around the upper side of the supporting plane, with differences that can even reach 25°C.

A further drawback of the above-mentioned solutions is represented by the uneven heating of the food products contained inside the cabinet; this drawback, in fact, is the sign, on the product itself, that the temperature is not distributed evenly across the surface and this, moreover, can affect the preservation and shelf life of the food product.

Furthermore, an unevenly heated supporting plane requires an overall higher quantity of thermal energy to promote the cooking and/or heating of the food products.

Therefore, food display cabinets using infrared heat sources also have, among other things, reduced energy efficiency, which increases the running costs of the equipment.
Documents GB2349454, JPH0614827 and EP1444933 describe cabinets or displays for displaying and storing cooked food products that have all the features illustrated in the preamble of claim 1. However, these cabinets and displays have all the drawbacks explained above.

### Presentation of the invention

The present invention intends to overcome the above-mentioned technical drawbacks by providing a particularly effective and efficient cabinet for displaying and storing cooked food products.

In particular, the main object of the present invention is to provide a cabinet for displaying and preserving cooked food products that suited to promote the uniform heating of the compartment suited to contain the food products.

It is a further object of the present invention to provide a cabinet for displaying and preserving cooked food products that suited to heat the food products contained therein and to maintain them at a substantially uniform temperature.

It is another object of the present invention to provide a cabinet for displaying and preserving cooked food products that is particularly energy efficient, in order to reduce electric energy consumption.

It is a further object of the present invention to provide a cabinet for displaying and preserving cooked food products that is particularly easy to make compared to the current displays for heated food.

It is another object of the present invention to provide a cabinet for displaying and preserving cooked food products that is particularly reliable and durable.

It is a further object of the present invention to provide a cabinet for displaying and preserving cooked food products that does not require special measures to maintain optimal insulation between the internal compartment and the external environment.

Again, it is not the least object of the present invention to provide a cabinet for displaying and preserving cooked food products that requires little maintenance during its operation.

These objects, together with others that are illustrated in greater detail below, are achieved by a cabinet for displaying and preserving cooked food products of the type according to claim 1.

Other objects that are better described below are achieved by a cabinet for displaying and preserving food products according to the dependent claims.

### Brief description of the drawings

The advantages and characteristics of the present invention are clarified by the following detailed description of a preferred but not limiting configuration of a cabinet for displaying and storing cooked food products for sale that is illustrated in the following drawings:
- **Figure 1** shows a side view of the upper portion of a cabinet for displaying and preserving cooked food products;
- **Figure 2** shows a side view of a first detail of Figure 1;
- **Figure 3** shows the side view of the cabinet of Figure 1, in which the propagation of the infrared emission inside the compartment where the food products are preserved is schematically shown;
- **Figure 4** shows a side view of a second detail of Figure 1;
- **Figure 5** shows a perspective view of the second detail shown in Figure 4;
- **Figure 6** shows a perspective view from below of a third detail of Figure 5.

### Detailed description of the invention

The subject of the present invention is a cabinet, the purpose of which is to display and store cooked food products suited to be consumed by a user.

Said cabinet, hereinafter indicated by the reference number **1,** is configured to heat the food products **P** to a predetermined temperature so that they can be consumed hot by a user.

Conveniently, the cabinet **1** that is the subject of the invention can be configured to cook a food product **P** completely or to maintain the latter at a predetermined heating temperature.

The maximum temperature **T** ₘₐₓ for heating or cooking the food product **P** can be set by the regulations in force in the country where the cabinet **1** will be installed, in general this temperature is below 100 °C and generally included between 65 °C and 75 °C.

The term "food product" as used in this description refers to any food and/or dishes that has already undergone prior cooking and/or pre-cooking and that is intended to be consumed by a consumer. In the present description, therefore, when reference is made to the possibility of promoting the "cooking" of a food product, what is meant is the heating of the food product itself in such a way as to bring it from an initial pre-cooking stage to a final stage where it is fully cooked.

The cabinet **1,** which is the subject of the present invention, is particularly suited to be installed in food outlets such as, for example, supermarkets, retail shops, restaurants and cafeterias, public premises, etc.

The cabinet **1** comprises a supporting frame **2** defining a longitudinal axis indicated by the reference letter **L** in the Figures.

More specifically, the longitudinal direction **L** defined by the frame **2** can be substantially vertical.

The frame **2** is also provided with a plurality of sides **3, 4** defining an internal compartment **5** intended to contain the food product **P.**

The supporting frame **2** can be constituted by a plurality of parts suited to define the external body of the cabinet, however, for the purposes of the present description the part of the frame **2** that is useful for understanding the invention comprises the pair of sides **3** and the upper side **4** delimiting the compartment **5.**

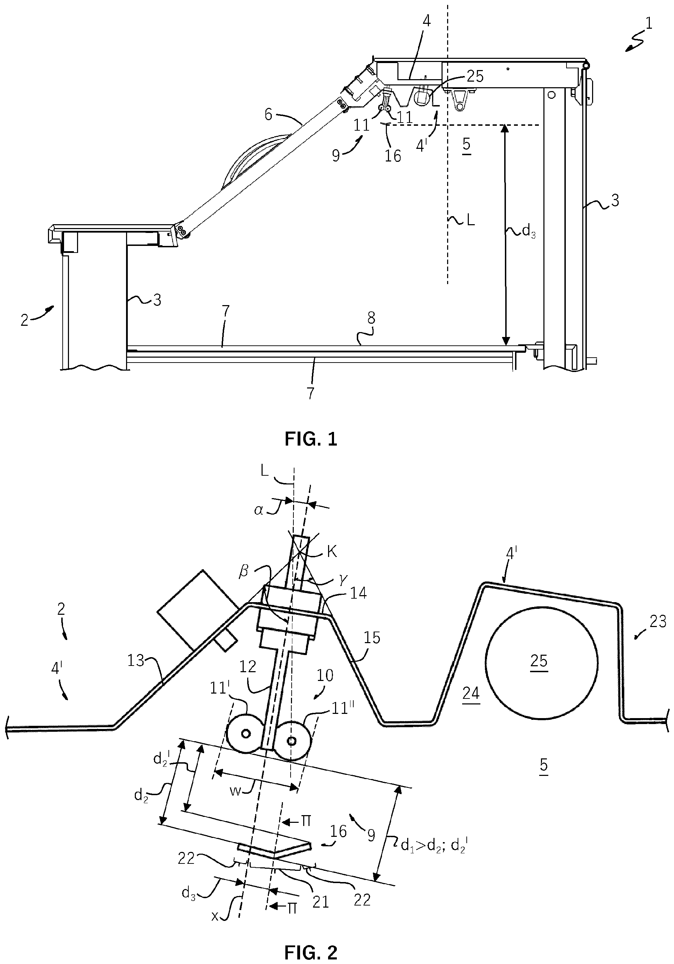

These sides **3, 4** are clearly visible in **Figure 1****.**

More specifically, one of the sides **3** can comprise a door **6** suited to be selectively opened/closed by a user (or an operator) to allow the collection/insertion of the food product **P** contained inside the compartment **5.**

There is also a supporting plane **7** positioned inside the compartment **5** and suited to support the food products **P** intended to be heated.

As can be observed in greater detail in **Figure 1****,** the supporting plane **7** can have a substantially horizontal upper surface **8.**

The internal compartment **5,** therefore, is delimited laterally and at the top by the sides **3** and the upper side **4** of the frame **2,** and by the supporting plane **7** at the bottom. More specifically, the upper surface **8** of the compartment defines the bottom of the compartment **5,** while the lower surface of the upper side **4** defines the top of the compartment **5.**

Conveniently, it is possible to use one or more insulating layers (generally made of an environmentally friendly material such as *Nefalit* or a similar one) interposed between the supporting plane **7** and the upper surface **8,** in such a way as to reduce the heat dispersion that occurs in that area.

Conveniently, the cabinet **2** will be provided with heating means **9** positioned inside the compartment **5.**

In particular, the heating means 9 can be placed inside the compartment 5 in proximity to the upper side **4** of the frame, as better illustrated in **Figure 1** and **Figure 2****.**

The purpose of said means **9** is to promote the heating of the supporting plane **7** to a predetermined temperature **T₁.**

More specifically, the heating means **9** are suited to transfer thermal energy (or heat) to the external surface **8** of the supporting plane **7** on which the food products **P** to be cooked/heated are directly placed.

In this way, during the operation of the heating means **9,** the thermal energy absorbed by the external surface **8** of the supporting plane **7** is transferred to the food products **P** by conduction, so as to cook/heat them.

Conveniently, the heating means **9** may comprise at least one infrared source **10.**

In the configuration of the cabinet **1** illustrated in the Figures, a single infrared source **10** is used, which consists of one pair of rectilinear radiant tubes **11** mutually arranged side by side.

These tubes **11** substantially extend along the entire length of the compartment **5.**

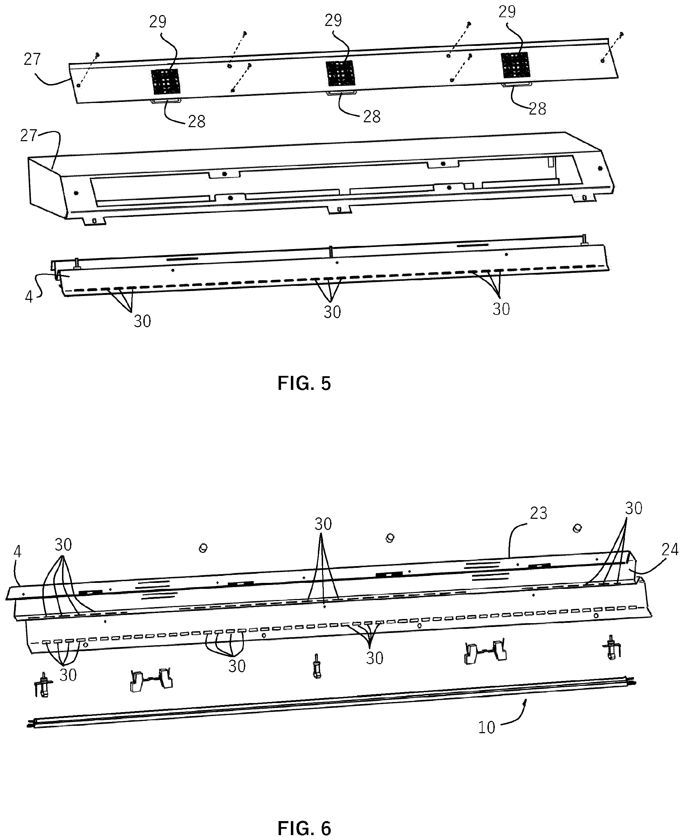

The configuration of the infrared source **10** is clearly visible in **Figure 6****,** where the radiant tubes **11** are anchored to an installation side **4'** positioned in proximity to the upper side **4** by means of a plurality of shaped supports **12** arranged in a spaced manner along the extension of said tubes **11.**

The radiant tubes **11** are suited to be powered electrically (through appropriate electrical connections known per se and not illustrated in the Figures), in such a way as to generate an electromagnetic radiation in the infrared band.

Conveniently, the radiant tubes may comprise a laminar parabolic element (generally made of a metallic material) positioned on their upper portion thereof so as to strongly limit infrared radiation in the area above the source **10.** Furthermore, this parabolic element allows most of the infrared radiation that originally propagates upwards to be conveyed downwards and in the direction of the supporting plane **7.**

The parabolic element (not shown in the Figures) associated with the radiant tubes can be inserted inside the latter or, alternatively, it can be positioned externally and cover their upper outer surface, or both.

In general, the total electric power absorbed by an infrared source **10** installed in a cabinet according to this description can be included between 500W and 4000W.

The infrared radiation emitted by the source **10** is almost completely absorbed by the upper surface **8** of the supporting plane **7,** which causes the latter to heat up.

Conveniently, the infrared source **10** can be anchored to the frame of the cabinet so as to follow a predetermined direction of installation, indicated by the reference letter **X** in the Figures. In other words, the infrared source is anchored to the frame of the cabinet so that it is arranged along the direction of installation **X.**

Conveniently, the direction of installation **X** associated with the infrared source **10** can be tilted by a first predetermined inclination angle α with respect to the longitudinal development direction **L** of the frame **2.**

More specifically, the first inclination angle **α** can be between 5° and 15° and can preferably range between 7° and 12°.

The installation side **4'** of the frame **2** can be bent and shaped in such a way as to feature three contiguous sections **13, 14, 15,** each of which is flat and inclined.

In particular, the supports **12** of the infrared source **10** can be anchored to the intermediate tilted section, indicated by the reference number **14** in the Figures.

This intermediate section **14** is typically inclined by the first inclination angle **α** (generally included between 5° and 15°) with respect to the longitudinal axis **L.**

The installation side **4'** of the frame **2** has also one pair of flat and inclined sections **12, 15** arranged opposite and contiguous with the intermediate inclined section **14** to which the supports **12** of the infrared source **10** are anchored.

Said inclined sections **12, 15** are arranged laterally to the source and are oriented in such a way that they converge towards a point located outside the compartment **5** (and outside the installation side **4'**).

This point is indicated by the reference letter **P** in the Figures.

The first of these sections, indicated by the reference number **13** in the **Figures,** is tilted by a second predetermined inclination angle **β** with respect to the longitudinal axis **L.**

In general, the second angle of inclination **β** can be included between 40° and 60° and typically close to 50°.

The other section of this pair, indicated by the reference number **15** in the Figures, is tilted by a third predetermined inclination angle **γ** with respect to the longitudinal axis **L.**

In general, the third angle of inclination **γ** can be included between 15° and 35° and typically close to 15°.

Sections **13, 15** of the installation side **4** are arranged in such a way that they mutually converge towards a point **K** located outside the compartment **5,** as clearly visible in **Figure 2****.**

The inclination of sections **13, 15** of the installation side **4'** along directions of inclination that converge towards the point **K** located outside the compartment makes it possible to define a housing inside which the infrared source **10** is located.

Advantageously, the cabinet **1** that is the subject of the present invention comprises a reflector element **16** positioned inside the compartment **5,** under the infrared source **10.**

More specifically, the reflector element **16** is inserted under the infrared source **10** in the space separating the radiant tubes **11, 11'** and the upper surface **8** of supporting plane **7.** As schematically shown in greater detail in **Figure 1****,** the reflector element is installed under the infrared source **10** along a directrix **J** connecting the source **10** itself to a point **Q** of the supporting plane. This directrix is substantially constituted by a section of a straight line suited to directly connect the source **10** to a predetermined point **Q** on the upper surface **8** of the supporting plane **7.**

Therefore, according to what has been explained above, it can be stated that the reflector is arranged inside the compartment, in the space separating the infrared source **10** from the supporting plane **7,** and in particular in the space visible to a hypothetical operator who looks downwards, that is, in the direction of the supporting plane **7,** starting from a cross section of the cabinet made at the infrared source **10.**

In other words, the reflector element **16** is interposed in the path along which the infrared radiation would propagate between a starting point defined by the source **10** and an arrival point located in the upper surface **8** of the supporting plane **7;** this radiation path, furthermore, is of the direct type, that is, it is constituted by a straight line during the propagation of which the electromagnetic radiation is not (or would not be) reflected by other objects present inside the compartment.

The reflector element **16,** therefore, is configured to at least partially reflect the infrared radiation generated by the source **10** towards the sides **3** and/or the installation side **4'** of the frame **2.**

In particular, the reflector **16** is configured to reflect a part of the infrared radiation generated by the source **10** and suited to propagate inside the compartment **5** along a propagation direction that is such as to directly hit the supporting plane **7** (and the food product placed on it), that is, without being first reflected by other sides or objects located inside the compartment **5** or above the source **10.**

Conveniently, the reflector **16** is configured to reflect only a portion of the infrared radiation emitted by the source **10** and suited to reach the supporting plane **7** in a direct manner (that is, the radiation that hits the upper surface **8** of the supporting plane **7** without undergoing one or more reflections by the sides or objects located inside the compartment **5**). The remaining part of the direct radiation emitted by the source **10** reaches the upper surface **8** of the supporting plane **7** (or the food product **P** placed on said supporting plane **7**) without being reflected along its path.

Furthermore, the width **w₁** of the reflector **16** is considerably smaller than the transversal dimension **w₂** of the compartment **5** just below the reflector **16** itself. In this way, therefore, a large part of the infrared radiation emitted by the source **10** will reach the plane supporting plane **7** (and the food product supported by it) directly and without interfering with the reflector **16,** while a small part of the radiation emitted by the source **10** (and which would directly hit the supporting plane) is reflected by the reflector towards the sides **3** and/or the installation side **4'** of the frame **2.**

The reflector element **16** will be suited to reflect most of the infrared radiation incident on it towards the installation side **4'** of the frame **2.**

More specifically, as is better described below, the shape of the reflector element **16** will be selected in such a way as to promote the reflection of most of the incident infrared radiation (generated by the source **10**) towards the pair of inclined sections **13, 15** arranged beside the section **14** that supports the source **10** itself.

The main function of the reflector element **16** is to "shield" a large area of the upper surface **8** of the supporting plane **7** from the direct infrared radiation generated by the source **10.**

The infrared radiation that reaches the reflector element **16** then hits the supporting plane **7** only after being reflected at least twice: *i)* a first time at the reflector element **16** itself, and *ii)* a second time at the installation side **4'** of the frame **2** (or at the inclined sections **13, 15** comprising said side).

Conveniently, the infrared radiation that reaches the reflector element **16** can then hit the supporting plane **7** after being further reflected following reflection *i)* and *ii)* mentioned above.

The reflector element **16** is positioned at a relatively high distance **d₃** from the supporting plane **7** and such as to prevent (or make substantially null) the transfer of thermal energy from the reflector element **16** to the food product **P** placed on the upper surface **8** of the supporting plane **7.**

In other words, the food product **P** located inside the compartment **5** can be heated exclusively through the infrared radiation emitted by the source **10** while the action of the reflector **16** in the process designed to heat/cook the food product **P** is almost zero.

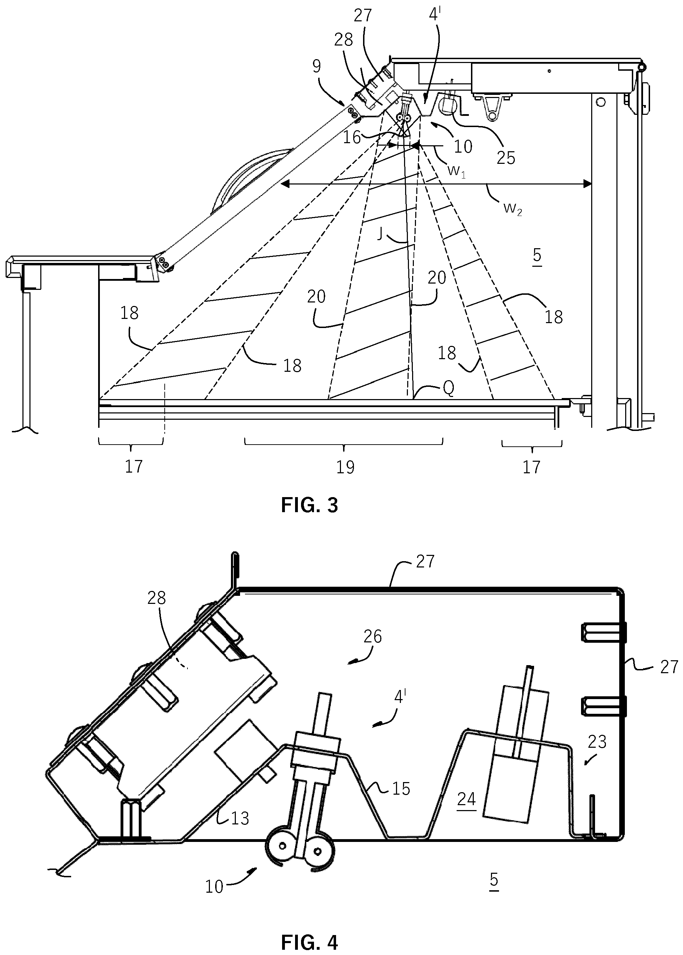

**Figure 3** schematically shows the main paths followed by the infrared radiation that propagates from the source **10** to the supporting plane **7.**

More specifically, according to the invention, two direct radiation beams invest the supporting plane **7** in proximity to its end portions **17.** The expression "direct radiation beams" means the infrared radiation that is never reflected along the path connecting the source **10** to the supporting plane **7.**

In **Figure 3****,** these direct radiation beams are delimited by the dashed lines indicated by the reference number **18.**

The central portion **19** of the supporting plane **7,** on the contrary, is hit by reflected infrared radiation; in particular, the beams that reach the central area of the supporting plane undergoes a first reflection at the reflector element **16** located under the source **10,** and then are reflected a second time at the pair of inclined sections **13, 15** of the installation side **4'.**

Conveniently, the value of the second inclination angle **β** and of the third of inclination angle **γ** respectively associated with the inclined sections **13, 15** of the upper side **4** are selected in such a way as to direct the incident infrared component (which has already been reflected at the reflector element **16**) towards the supporting plane **7.**

In **Figure 3****,** the reflected beams that reach the plane **7** after being reflected at the inclined sections **13, 15** are schematically represented by the dashed lines indicated by the reference number **20.**

Obviously, the radiation beams shown in **Figure 3** are to be considered as an example and are intended to indicate the two main types of radiation that hit the supporting plane **7.** It should be noted, in fact, that a considerable part of the thermal energy associated with the latter is obtained through the combined effect (or overlapping) of the direct radiation coming from the source **10** and the radiation that has been reflected at the sides **3** of the frame **2** or other parts of the side **4'.**

Conveniently, the reflector element **16** can be constituted by a shaped metallic element extending over the full length of the infrared source **10.**

More specifically, the reflector element **16** can consist of a metal section bar shaped so as to define a lowered central portion **21** and one pair of end portions **22** extending from opposite sides with respect to the central portion **21.**

In the configuration of the reflector element **16** illustrated in the Figures (and better visible in **Figure 2**), this element has a substantially V-shaped cross section oriented so as to maintain the central portion **21** at a distance **d₁** from the infrared source **10** greater than the distance **d₂, d₂'** that separates the end portions **22** from the same source.

In other words, and as can be better seen in the Figures, the reflector element **16** is positioned so that the cusp (or vertex) of the "V" shape of the cross section is directed towards the supporting plane **7.**

Conveniently, the reflector element **16** can have a shape different from that shown in the Figures, however, the preferred shape and installation of this component require that its central position **21** be placed at a greater distance **d₁** from the infrared source **10** than the distance **d₂** at which the end portions **22** are placed.

In this way, from the point of view of the infrared wave propagating from the source **10,** the reflector element has a substantially concave shape so as to direct the reflected radiation towards the installation side **4'** of the frame **2,** and in particular towards the inclined sections **13, 15** of the latter.

However, it is also possible to use other shapes for the cross section of the reflector element (for example, a substantially convex shape), provided that the reflection of the incident wave is always oriented so as to reach the installation side **4'** of the frame **2.**

Conveniently, as can be better seen in **Figure 2****,** the reflector element **16** is located under the infrared source **10** in a misaligned position (that is, not coaxial) with respect to the installation direction **X** of the latter.

The expression " misaligned position" in the preceding paragraph is intended to refer to the fact that the center plane of the reflector element, indicated by the symbol **π** in **Figure 2****,** is neither aligned with nor superimposed on the installation direction **X** of the infrared source **10;** on the contrary, said plane **π** is spaced from the installation direction **X** by a predetermined distance **d₃.**

The center plane **π** of the reflector element **16** lies at its central portion **21,** therefore it is evident that this portion **21** and the installation direction **X** are separated by the misalignment distance **d₃** introduced above.

The misalignment of the reflector element **16** with respect to the installation direction **X** makes it possible to vary the amount of infrared radiation emitted by the source **10** that reaches the supporting plane **7** directly, that is, without being reflected during its propagation.

In the configuration of the cabinet illustrated in **Figure 2****,** the central portion **21** of the reflector element **16** (or, alternatively, its center plane **π**) is offset to the right by the misalignment distance **d₃** with respect to the installation direction **X** of the source **10.**

In this way, a considerable part of the infrared radiation generated by the radiant tube of the source **10** positioned further to the left (indicated by the reference number **11'** in **Figure 2**) hits the supporting plane **7** directly, while the radiation emitted by the tube positioned further to the right (indicated by the reference number **11'** in **Figure 2**) is completely (or almost completely) reflected by the reflector element **16.**

The misalignment of the reflector element with respect to the installation axis of the source generates an asymmetrical reflection with respect to the infrared radiation emitted by the tubes **11', 11".**

It has been possible to verify experimentally that the size and position of the reflector element **16** play a decisive role in promoting the correct distribution of the infrared radiation that reaches the supporting plane **7.**

Furthermore, the size of the infrared source **10** affects the size and position of the reflector element inside the compartment **5.**

In particular, it is possible to parameterize the position of the reflector element **16** in space and its dimensions as a function of a dimension of the source **10** used as a reference, for example its width (indicated by the reference letter **W** in **Figure 2**).

The dimensional relationship between the distances/dimensions of the reflector element **16** and the width **W** of the infrared source can be expressed as follows:
a) the width **w₁** of the reflector element **16** is included within a range defined by a minimum value **w_{1_min}** equal to two tenths of the width of the source **(W*2/10**) and a maximum value **w_{1_max}** equal to the width of the source (**W**);
b) the distance **d₁** that separates the central portion **21** of the reflector element **16** (that is, the cusp of the "V" in the configuration of the reflector element shown in the Figures) from the infrared source **10** is included within a range defined by a minimum value **d_{1_min}** equal to the width **W** of the source **10** and a maximum value **d_{1_max}** equal to twice said width (**2*W**). Furthermore, this distance is calculated along the installation direction **X** of the source **10;**
c) the misalignment distance **d₃** that separates the reflector element **16** and the installation direction **X** of the source **10** (that is, the distance **d₃** between the latter and the centre plane **π**) is included within an interval defined by a minimum value **d₃₋ₘᵢₙ** equal to one tenth of the width of the source (**W/10**) and a maximum value **d_{3_max}** equal to five tenths of said width (**W*5/10**).

By way of example, considering an infrared source **10** having an approximate width **W** of 20 mm, the values of the distances/dimensions of the reflector element **16** are as follows:
- width **w₁** of the reflector element **16:** 4 mm < w₁ < 20mm;
- distance **d₁** between source **10** and reflector element **16:** 20mm < d₁ <40mm;
- misalignment **d₃** between installation axis **X** of source **10** and reflector element **16:** 2mm < d₃ < 10 mm.

The above relationship, based on the reference dimension **W** of the source **10** and the dimensions/position of the reflector element **16,** makes it possible to arrange the latter in space in a position suited to distribute the infrared radiation produced by the source **10** and hitting the supporting plane **7** in a substantially uniform manner.

More specifically, it can be verified that the arrangement of a reflector element **16** in accordance with the distances/dimensions specified above makes it possible to considerably reduce the temperature gradient **ΔT** present on the external surface **8** of the supporting plane **8.** In particular, the installation of one reflector element **16** of the type described above in the compartment **5** can promote a more uniform distribution of temperature on the upper surface **8** of the supporting plane **7;** for example, the temperature gradient ΔT (that is, the thermal differential between two points of said surface) may be less than 10% and typically close to 5%.

Conveniently, the installation side **4'** of the frame **2** can have an additional shaped section **23** placed beside the infrared source **10** and suited to define a housing **24** for one or more LED lamps **25.**

The LED lamps **25** can be distributed along the transverse extension of the installation side **4'.**

These LED lamps **25** are illustrated schematically in **Figure 2****.**

The function of the LED lamps **25** is to illuminate the food products placed on the supporting plane **7.**

The cabinet **1** can include also a cooling system **26** suited to maintain the temperature near the infrared source **10** and the LED lamps **25** within a predetermined range of values below the maximum permissible values for said components.

The cooling system **26** can comprise a metallic supporting element **27,** illustrated in **Figure 5****,** intended to be positioned above the installation side **4'** suited to support the infrared lamp **10** and the LED lamps **25.**

This metallic element **27** is suited to support a plurality of fans **28** preferably positioned side by side along the transverse extension direction of the support itself.

Furthermore, the metallic element **27** can be provided with a plurality of openings **29** located at the fans **28.**

In addition to the above, the installation side **4'** is provided with a plurality of slits **30** arranged in such a way as to form rows (or lines) that extend over the entire transverse extension the side itself.

The slits **30** are visible in **Figure 6****.**

The presence of the slits **30** and the openings **29** makes it possible to promote the circulation of an air flow that hits the infrared source **10** and is suited to extract the heat generated by the latter and by the LED lamps **25** and distribute it inside the compartment **5.**

The activation of the fans **28** promotes the generation of a fresh air flow, the circulation of which is forced through the opening **29.**

This flow is subsequently conveyed towards the slits **30** in such a way as to generate a downward blow at the outlet of the the slits **30.**

This blowing action helps to dissipate the heat that formed in the upper area of the compartment **5** by conveying it towards the lower area of the compartment itself.

Blowing air downwards helps to promote the heating of the food products **P** placed on the supporting plane **7,** as well as to prevent the sides of the compartment from fogging up.

A first set of slits **30** can be configured to generate an air flow directed downwards and suited to hit the LED lamps **25** and the infrared source **10** in order to cool them.

A second set of slits **30** can be configured to generate the circulation of a substantially laminar air flow that skims the installation side **4'** and possibly also with the upper side **4** of the compartment **5.**

This laminar air flow helps to maintain the temperature of the installation side **4'** at values that are not dangerous in case of contact with a user's body.

The circulation of air within the compartment **5** thus makes it possible to cool the infrared source **10** and the LED lamps **25** and prevent them from overheating, which could damage them or reduce their service life.

In addition to the above, the circulation of the air flow makes it possible to keep all the components located inside the compartment **5** at a temperature lower than a critical value, in such a way as to reduce the risk of burns for a user who comes into contact with one or more of said components.

The heat produced by the infrared source **10** and the LED lamps **25** is also used to heat the food products **P** positioned on the supporting plane **7;** thanks to this feature, it is possible to increase the thermal efficiency of the cabinet **1** and reduce the energy consumption associated with the latter. In other words, the special configuration of the cooling system **26** makes it possible to generate hot air flows oriented towards the supporting plane **7** and suited to contribute to the heating/cooking of the food products **P** placed inside the compartment.

This special configuration of the cooling system **26** makes it possible to reuse for heating/cooking purposes of the food products **P** a good portion of the amount of heat generated by the source and the lamps; until now this heat has been considered a "side effect" associated with the operation of the radiant/luminous devices and therefore completely useless for the efficiency of the cabinet.

In addition to the above, the circulation of the air flow prevents condensation on the sides **3** (generally made of glass) that delimit the compartment **5,** keeping them always clear and substantially clean.

In order to maximize the effects described above, it is possible to conveniently vary the pitch and the cross sections of the slits **30** provided on the installation side **4'.**

Conveniently, the heating means **9** can include an electromagnetic induction heat source (not shown in the Figures) suited to promote the heating of the supporting element.

In this case, therefore, the heating of the supporting plane can be achieved through the synergetic effect obtained mainly by combining two distinct heat sources: an infrared source **10** and an electromagnetic induction source.

The present invention can be carried out in other variants, all falling within the scope of the claims; and dimensions of the invention can be any, provided that they are compatible with its use.

The numbers and reference signs included in the claims and in the description are only intended to increase the clarity of the text and must not be considered as elements limiting the technical interpretation of the objects or processes identified by them.

## Claims

1. A cabinet for displaying and preserving cooked heated food products (**P**), comprising:
- a supporting frame (**2**) provided with a plurality of sides (**3, 4**) suited to define an internal compartment (**5**);
- a supporting plane (7) with an upper surface (8) positioned inside said compartment (**5**) and suited to support the cooked food products (**P**) intended to be displayed and preserved;
- heating means (**9**) positioned inside said compartment (**5**) above said plane supporting plane (**7**), said heating means (**9**) being suited to heat said plane supporting plane (**7**) to a predetermined temperature (**T**);
wherein said heating means (**9**) comprise at least one infrared source (**10**);
wherein it comprises a reflector element (**16**) positioned inside said compartment (**5**) and arranged under said infrared source (**10**), said reflector element (**16**) being suited to at least partially reflect the infrared radiation emitted by said infrared source (**10**);
said reflector (**16**) being configured to reflect only a portion of the infrared radiation emitted by said source (**10**) and suited to reach said supporting plane (**7**) in a direct manner;
so as to shield a large area of said upper surface (**8**) of said supporting plane (**7**) from the direct infrared radiation generated by said source (10), the remaining part of the direct radiation emitted by the source (10) reaching the upper surface (8) or the food product (P) without being reflected along its path.

2. Cabinet according to claim 1, **characterized in that** said supporting frame (**2**) defines a longitudinal axis (**L**) and said infrared source (**10**) has a predetermined installation direction (**X**), said source (**10**) being anchored to an installation side (**4'**) placed in proximity to the upper side (**4**) of said supporting frame (**2**) with said installation direction (**X**) tilted with respect to said longitudinal axis (**L**) by a first predetermined inclination angle (**α**).

3. Cabinet according to claim 2, **characterized in that** said first inclination angle (**α**) is included between 7° and 12°.

4. Cabinet according to one or more of the preceding claims, **characterized in that** the cross section of said reflector element (**16**) has a predetermined shape defining a central portion (**21**) and one pair of end portions (**22**) extending from opposite sides with respect to said central portion (**21**).

5. Cabinet according to claim 3, **characterized in that** said central portion (**21**) is positioned at a first distance (**d₁**) from said infrared source (**10**) and said end portions (**22**) are positioned at a second distance (**d₂, d₂'**) from said infrared source (**10**), said distances (**d₁, d₂, d₂'**) being determined along the installation direction (**X**) of said infrared source **(10).**

6. Cabinet according to claim 5, **characterized in that** said first distance (**d₁**) is greater than said second distance (**d₂, d₂'**).

7. Cabinet according to one or more of the preceding claims, **characterized in that** said infrared source (**10**) and said reflector element (**12**) have respective predetermined widths (**w, w₁**); the width (**w₁**) of said reflector element (**16**) being included within a range defined by a minimum value (**w_{1_min}**) equal to five tenths of the width (**w**) of said infrared source (**10**) and a maximum value (**w_{1_max}**) equal to the width (**w**) of said infrared source (**10**).

8. Cabinet according to claim 7, **characterized in that** the distance (**d₁**) of said central portion (**21**) from said infrared source (**10**) is included within a range defined by a minimum value (**d_{1_min}**) equal to the width (**w**) of the infrared source (**10**) and a maximum value (**d_{1_max}**) equal to twice the width (**w**) of said infrared source (**10**).

9. Cabinet according to one or more of the preceding claims, **characterized in that** the centre line of said central portion (**21**) of said reflector element (**16**) is misaligned with respect to the installation direction (**X**) of said infrared source (**10**).

10. Cabinet according to claim 9, **characterized in that** the value of the misalignment (**d₃**) of said central portion (**21**) with respect to said installation direction (**X**) is included within a range defined by a minimum value (**d₃₋ₘᵢₙ**) equal to one tenth of the width (**w**) of said infrared source (**10**) and a maximum value (**d_{3_max}**) equal to five tenths of the width (**w**) of said infrared source (**10**).

11. Cabinet according to one or more of the preceding claims, **characterized in that** the installation side (**4'**) has two tilted sections (**13, 15**) arranged laterally to said infrared source (**10**), said tilted sections (**13, 15**) being mutually convergent with respect to a point (**K**) external to said compartment (**5**).

12. Cabinet according to claim 11, **characterized in that** one of said tilted sections (**13**) has, with respect to said longitudinal axis (**L**), a second inclination angle (**β**) included between 35° and 60° and the other tilted section (**15**) has, with respect to said longitudinal axis (**L**), a third inclination angle (**γ**) included between 15° and 40°.

13. Cabinet according to claim 1, **characterized in that** said heating means (**9**) comprise a magnetic induction source positioned under said supporting plane.

14. Cabinet according to claim 1, **characterized in that** said supporting plane (**7**) is made of a material selected from among the group of materials suited to absorb the infrared radiation emitted by said infrared source (**10**).

## Patentansprüche

1. Schrank zum Präsentieren und Konservieren von gekochten, erhitzten
Lebensmittelprodukten (**P**), umfassend:
- einen Tragrahmen (**2**), der mit einer Vielzahl von Seiten (**3, 4**) versehen ist, die dazu geeignet sind, ein Innenfach (**5**) zu definieren;
- eine Tragebene (**7**) mit einer oberen Oberfläche (**8**), die innerhalb des besagten Fachs (**5**) positioniert ist und dazu geeignet ist, die gekochten Lebensmittelprodukte (**P**), die präsentiert und konserviert werden sollen, zu tragen;
- Heizmittel (**9**), die innerhalb des besagten Fachs (**5**) über der besagten flachen Tragebene (**7**) positioniert sind, wobei die besagten Heizmittel (**9**) dazu geeignet sind, die besagte flache Tragebene (**7**) auf eine vorbestimmte Temperatur (**T**) zu erhitzen;
wobei die besagten Heizmittel (**9**) mindestens eine Infrarotquelle (**10**) umfassen;
wobei er ein Reflektorelement (**16**) umfasst, das innerhalb des besagten Fachs (**5**) positioniert und unter der besagten Infrarotquelle (**10**) angeordnet ist, wobei das besagte Reflektorelement (**16**) dazu geeignet ist, die Infrarotstrahlung, die von der besagten Infrarotquelle (**10**) emittiert wird, zumindest teilweise zu reflektieren;
der besagte Reflektor (**16**) so konfiguriert ist, dass er nur einen Teil der Infrarotstrahlung, die von der besagten Quelle (**10**) emittiert wird, reflektiert und dazu geeignet ist, die besagte Tragebene (**7**) direkt zu erreichen;
derart, um einen großen Bereich der besagten oberen Oberfläche (**8**) der besagten Tragebene (**7**) vor der direkten Infrarotstrahlung, die von der besagten Quelle (**10**) erzeugt wird, abzuschirmen, wobei der verbleibende Teil der direkten Strahlung, die von der Quelle (**10**) emittiert wird, die obere Oberfläche (**8**) des Lebensmittelprodukts (**P**) erreicht, ohne auf seinem Weg reflektiert zu werden.

2. Schrank nach Patentanspruch 1, **dadurch gekennzeichnet, dass** der besagte Tragrahmen (**2**) eine Längsachse (**L**) definiert und die besagte Infrarotquelle (**10**) eine vorbestimmte Installationsrichtung (**X**) aufweist, wobei die besagte Quelle (**10**) an einer Installationsseite (**4'**) verankert ist, die in der Nähe der Oberseite (**4**) des besagten Tragrahmens (**2**) platziert ist, wobei die besagte Installationsrichtung (**X**) in Bezug auf die besagte Längsachse (**L**) um einen ersten vorbestimmten Neigungswinkel (**α**) geneigt ist.

3. Schrank nach Patentanspruch 2, **dadurch gekennzeichnet, dass** der besagte erste Neigungswinkel (**α**) zwischen 7° und 12° liegt.

4. Schrank nach einem oder mehreren der vorhergehenden Patentansprüche, **dadurch gekennzeichnet, dass** der Querschnitt des besagten Reflektorelements (**16**) eine vorbestimmte Form aufweist, die einen zentralen Abschnitt (**21**) und ein Paar Endabschnitte (**22**), die sich von gegenüberliegenden Seiten in Bezug auf den besagten zentralen Abschnitt (**21**) erstrecken, definiert.

5. Schrank nach Patentanspruch 3, **dadurch gekennzeichnet, dass** der besagte zentrale Abschnitt (**21**) in einem ersten Abstand (**d₁**) von der besagten Infrarotquelle (**10**) positioniert ist und die besagten Endabschnitte (**22**) in einem zweiten Abstand (**d₂, d₂'**) von der besagten Infrarotquelle (**10**) positioniert sind, wobei die besagten Abstände (**d₁**, **d₂, d₂'**) entlang der Installationsrichtung (**X**) der besagten Infrarotquelle (**10**) bestimmt werden.

6. Schrank nach Patentanspruch 5, **dadurch gekennzeichnet, dass** der besagte erste Abstand (**d₁**) größer ist als der besagte zweite Abstand (**d₂, d₂'**).

7. Schrank nach einem oder mehreren der vorhergehenden Patentansprüche, **dadurch gekennzeichnet, dass** die besagte Infrarotquelle (**10**) und das besagte Reflektorelement (**12**) jeweils vorbestimmte Breiten (**w, w₁**) aufweisen; die Breite (**w₁**) des besagten Reflektorelements (**16**) in einem Bereich liegt, der durch einen Mindestwert (**w_{1_min}**), der fünf Zehnteln der Breite (**w**) der besagten Infrarotquelle (**10**) entspricht, und einen Höchstwert (**w_{1_max}**), der der Breite (**w**) der besagten Infrarotquelle (**10**) entspricht, definiert ist.

8. Schrank nach Patentanspruch 7, **dadurch gekennzeichnet, dass** der Abstand (**d₁**) des besagten zentralen Abschnitts (**21**) von der besagten Infrarotquelle (**10**) in einem Bereich liegt, der durch einen Mindestwert (**d_{1_min}**), der der Breite (**w**) der Infrarotquelle (**10**) entspricht, und einen Höchstwert (**d_{1_max}**), der dem Doppelten der Breite (**w**) der besagten Infrarotquelle (**10**) entspricht, definiert ist.

9. Schrank nach einem oder mehreren der vorhergehenden Patentansprüche, **dadurch gekennzeichnet, dass** die Mittellinie des besagten zentralen Abschnitts (**21**) des besagten Reflektorelements (**16**) in Bezug auf die Installationsrichtung (**X**) der besagten Infrarotquelle (**10**) fehlausgerichtet ist.

10. Schrank nach Patentanspruch 9, **dadurch gekennzeichnet, dass** der Wert der Fehlausrichtung (**d₃**) des besagten zentralen Abschnitts (**21**) in Bezug auf die besagte Installationsrichtung (**X**) in einem Bereich liegt, der durch einen Mindestwert (**d_{3_min}**), der einem Zehntel der Breite (**w**) der besagten Infrarotquelle (**10**) entspricht, und einen Höchstwert (**d_{3_max}**), der fünf Zehnteln der Breite (**w**) der besagten Infrarotquelle (**10**) entspricht, definiert ist.

11. Schrank nach einem oder mehreren der vorhergehenden Patentansprüche, **dadurch gekennzeichnet, dass** die Installationsseite (**4'**) zwei geneigte Abschnitte (**13**, **15**) aufweist, die seitlich zur besagten Infrarotquelle (**10**) angeordnet sind, wobei die besagten geneigten Abschnitte (**13, 15**) in Bezug auf einen Punkt (**K**) außerhalb des besagten Fachs (**5**) zueinander konvergent sind.

12. Schrank nach Patentanspruch 11, **dadurch gekennzeichnet, dass** einer der besagten geneigten Abschnitte (**13**) in Bezug auf die besagte Längsachse (**L**) einen zweiten Neigungswinkel (**β**) aufweist, der zwischen 35° und 60° liegt, und der andere geneigte Abschnitt (**15**) in Bezug auf die besagte Längsachse (**L**) einen dritten Neigungswinkel (**γ**) aufweist, der zwischen 15° und 40° liegt.

13. Schrank nach Patentanspruch 1, **dadurch gekennzeichnet, dass** die besagten Heizmittel (**9**) eine magnetische Induktionsquelle umfassen, die unter der besagten Tragebene positioniert ist.

14. Schrank nach Patentanspruch 1, **dadurch gekennzeichnet, dass** die besagte Tragebene (**7**) aus einem Material besteht, das aus der Gruppe von Materialien ausgewählt ist, die dazu geeignet sind, die Infrarotstrahlung, die von der besagten Infrarotquelle (**10**) emittiert wird, zu absorbieren.

## Revendications

1. Armoire pour exposer et conserver des produits alimentaires cuits et chauffés
(**P**), comprenant :
- un cadre de support (**2**) pourvu de plusieurs côtés (**3, 4**) permettant de définir un compartiment interne (**5**);
- un plan de support (**7**) avec une surface supérieure (8) positionné à l'intérieur dudit compartiment (**5**) et apte à supporter les produits alimentaires cuits (**P**) destinés à être exposés et conservés;
- des moyens de chauffage (**9**) positionnés à l'intérieur dudit compartiment (**5**) au-dessus dudit plan de support plan (**7**), lesdits moyens de chauffage (**9**) étant aptes à chauffer ledit plan de support plan (**7**) à une température prédéterminée (**T**) ;
où lesdits moyens de chauffage (**9**) comprennent au moins une source infrarouge (**10**) ;
où elle comprend un élément réflecteur (**16**) positionné à l'intérieur dudit compartiment (**5**) et disposé sous ladite source infrarouge (**10**), ledit élément réflecteur (**16**) étant apte à réfléchir au moins partiellement le rayonnement infrarouge émis par ladite source infrarouge (**10**);
ledit réflecteur (**16**) étant configuré pour ne réfléchir qu'une partie du rayonnement infrarouge émis par ladite source (**10**) et apte à atteindre ledit plan de support (**7**) de manière directe ;
de manière à protéger une grande partie de ladite surface supérieure (**8**) dudit plan de support (**7**) du rayonnement infrarouge direct généré par ladite source (**10**), la partie restante du rayonnement direct émis par la source (**10**) atteignant la surface supérieure (**8**) du produit alimentaire (**P**) sans être réfléchie le long de son parcours.

2. Armoire selon la revendication 1, **caractérisée en ce que** ledit cadre de support (**2**) définit un axe longitudinal (**L**) et ladite source infrarouge (**10**) a une direction d'installation prédéterminée (**X**), ladite source (**10**) étant ancrée à un côté d'installation (**4'**) placé à proximité du côté supérieur (**4**) dudit cadre de support (**2**) avec ladite direction d'installation (**X**) inclinée par rapport audit axe longitudinal (**L**) d'un premier angle d'inclinaison prédéterminé (**α**).

3. Armoire selon la revendication 2, **caractérisée en ce que** ledit premier angle d'inclinaison (**α**) est compris entre 7° et 12°.

4. Armoire selon l'une ou plusieurs des revendications précédentes, **caractérisée en ce que** la section transversale dudit élément réflecteur (**16**) a une forme prédéterminée définissant une partie centrale (**21**) et une paire de parties d'extrémité (**22**) s'étendant de côtés opposés par rapport à ladite partie centrale (**21**).

5. Armoire selon la revendication 3, **caractérisée en ce que** ladite partie centrale (**21**) est positionnée à une première distance (**d₁**) de ladite source infrarouge (**10**) et lesdites parties d'extrémité (**22**) sont positionnées à une deuxième distance (**d₂, d₂ '**) de ladite source infrarouge (**10**), lesdites distances (**d₁, d₂, d₂'**) étant déterminées le long de la direction d'installation (**X**) de ladite source infrarouge (**10**).

6. Armoire selon la revendication 5, **caractérisée en ce que** la première distance (**d₁**) est supérieure par rapport à la deuxième distance (**d₂, d₂ '**).

7. Armoire selon l'une ou plusieurs des revendications précédentes, **caractérisée en ce que** ladite source infrarouge (**10**) et ledit élément réflecteur (**12**) ont des largeurs respectives prédéterminées (**w, w₁**); la largeur (**w₁**) dudit élément réflecteur (**16**) étant comprise dans une plage définie par une valeur minimale (**w_{1_min}**) égale à cinq dixièmes de la largeur (**w**) de ladite source infrarouge (**10**) et une valeur maximale (**w_{1_max}**) égale à la largeur (**w**) de ladite source infrarouge (**10**).

8. Armoire selon la revendication 7, **caractérisée en ce que** la distance (**d₁**) de ladite partie centrale (**21**) par rapport à ladite source infrarouge (**10**) est comprise dans une plage définie par une valeur minimale (**d_{1_min}**) égale à la largeur (**w**) de la source infrarouge (**10**) et une valeur maximale (**d_{1_max}**) égale à deux fois la largeur (**w**) de ladite source infrarouge (**10**).

9. Armoire selon l'une ou plusieurs des revendications précédentes, **caractérisée en ce que** la ligne centrale de ladite partie centrale (**21**) dudit élément réflecteur (**16**) est désalignée par rapport à la direction d'installation (**X**) de ladite source infrarouge (**10**).

10. Armoire selon la revendication 9, **caractérisée en ce que** la valeur du désalignement (**d₃**) de ladite partie centrale (**21**) par rapport à ladite direction d'installation (**X**) est comprise dans une plage définie par une valeur minimale (**d_{3_min}**) égale à un dixième de la largeur (**w**) de ladite source infrarouge (**10**) et une valeur maximale (**d_{3_max}**) égale à cinq dixièmes de la largeur (**w**) de ladite source infrarouge (**10**).

11. Armoire selon l'une ou plusieurs des revendications précédentes, **caractérisée en ce que** le côté d'installation (**4'**) comporte deux sections inclinées (**13**, **15**) disposées latéralement par rapport à ladite source infrarouge (**10**), lesdites sections inclinées (**13, 15**) étant mutuellement convergentes par rapport à un point (**K**) extérieur audit compartiment (**5**).

12. Armoire selon la revendication 11, **caractérisée en ce qu'**une desdites sections inclinées (**13**) présente, par rapport audit axe longitudinal (**L**), un deuxième angle d'inclinaison (**β**) compris entre 35° et 60° et l'autre section inclinée (**15**) présente, par rapport audit axe longitudinal (**L**), un troisième angle d'inclinaison (**γ**) compris entre 15° et 40°.

13. Armoire selon la revendication 1, **caractérisée en ce que** lesdits moyens de chauffage (**9**) comprennent une source d'induction magnétique positionnée sous ledit plan de support.

14. Armoire selon la revendication 1, **caractérisée en ce que** ledit plan de support (**7**) est constitué d'un matériau choisi dans le groupe des matériaux aptes à absorber le rayonnement infrarouge émis par ladite source infrarouge (**10**).
